# EUROPEAN PATENT SPECIFICATION

(11) **EP 1 452 980 B1**
(45) Date of publication and mention of the grant of the patent: **12.08.2009**
(21) Application number: 04002574.4
(22) Date of filing: 05.02.2004
(51) Int. Cl.: G06F 17/30

(54) **System and method for generating a request for information about selected objects**
System und Verfahren zur Generierung einer Abfrage von Information über ausgewählte Objekte
Système et méthode pour générer des requêtes d'information sur des objets selectionnés

(30) Priority: 28.02.2003 US 376176
(43) Date of publication of application: 01.09.2004
(73) Proprietor: MICROSOFT CORPORATION, Redmond, WA 98052 (US)
(72) Inventor: Prang, Bruce, NE, Woodinville Washington 98072 (US); Sonkin, Dmitry, Redmond Washington 98052 (US); Popa, Marius, Bellevue Washington 98007 (US)
(74) Representative: Grünecker, Kinkeldey, Stockmair & Schwanhäusser Anwaltssozietät

(56) References cited:
- WO-A-00/75849
- US-A- 5 634 053
- WIEDERHOLD G: "MEDIATORS IN THE ARCHITECTURE OF FUTURE INFORMATION SYSTEMS" COMPUTER, IEEE COMPUTER SOCIETY, LONG BEACH., CA, US, US, vol. 25, no. 3, March 1992 (1992-03), pages 38-49, XP001008866 ISSN: 0018-9162

## Description

### BACKGROUND OF THE INVENTION

### Field of the Invention

The present invention is directed to the field of data storage and manipulation, and, more specifically, to receiving a first query written in a uniform format and translating the first query into a request for information formatted for execution on a particular object.

### Description of the Prior Art

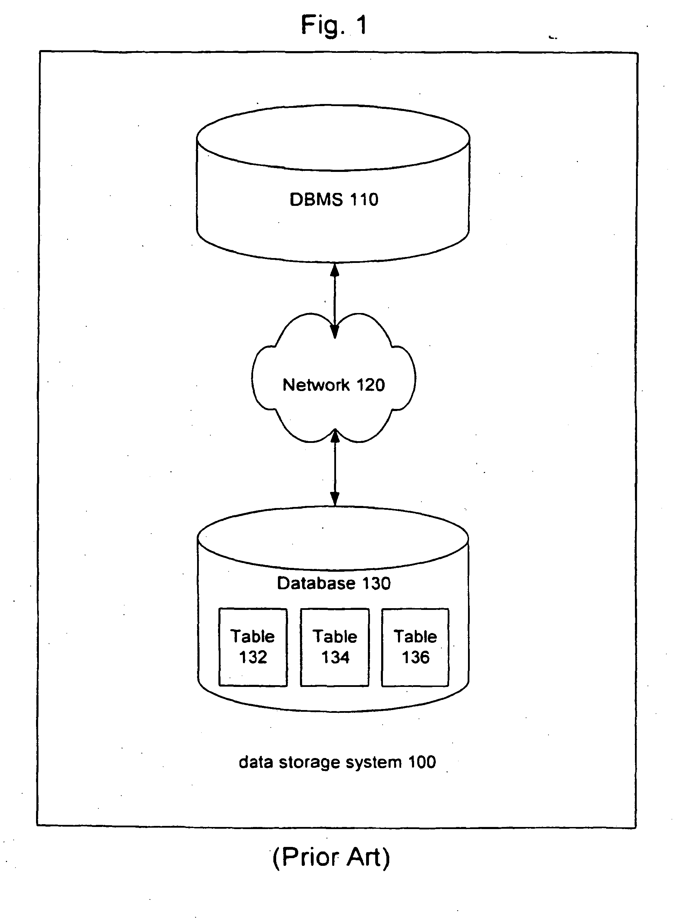

In conventional data storage systems, data is stored in a hierarchical collection of "objects." An exemplary prior art data storage system is shown in Fig. 1. As shown, data storage system 100 includes Database management system (DBMS) 110, database 130, and data tables 132-136. DBMS 110 provides access to database 130 through network 120. Database 130 includes data tables 132-136, which, in turn, include one or more columns (not shown). In addition to executing queries on the data stored in such objects, it is also often desirable to gather information about properties of the objects themselves. For example, such properties may be the space used or space available in a database or the creation date or row count of a data table. Such information is useful in various aspects of database administration and query optimization.

In conventional data storage systems, such information may be retrieved by executing queries at a DBMS. A disadvantage of such queries is that they must be targeted to a specific DBMS on which they are being executed. For example, such queries must be targeted to a particular version of a DBMS. Thus, because such queries require knowledge of programming requirements of specific DBMS's, such queries may require a lot of time and, therefore, expense to generate. Thus, there is a need in the art for a uniform format for such queries that is not unique to a particular DBMS version, but, rather, may be implemented across a plurality of DBMS versions. It is also desired that such uniform queries be extendable to servers such as, for example, on-line analytical processing (OLAP) servers or management instrumentation servers.

The document US 5,634,053 discloses a Federated Information Management System and Method for Providing Data Site Filtering and Translation for Heterogeneous Databases. Multiple Users are allowed to access through a global query geographically dispersed and heterogeneous information management systems or Relational DataBase Management Systems (RDBMS). Users can formulate their global queries using either a structured query language (SQL) or a graphical user interface (GUI). In a global query generated in SQL, the Select command identifies the desired data fields, the From command identifies the table of interest, and the Where command assigns the data field a particular value for searching the databases.

Furthermore, it is desired that such uniform queries enable objects to be "self discoverable", meaning that a query may request the properties of objects for which information may be requested. For example, a self discovery query may request which properties are discoverable for a data table, and the results of the query may specify that creation date and row count are discoverable properties. Once it is known which properties are discoverable, follow up queries could request information regarding such properties for a particular object or group of objects. For example, a follow up query may request the row count of the table.

### SUMMARY OF THE INVENTION

It is the object of the present invention to provide an improved method for generating a request for information about selected objects. This object is solved by the subject-matter of the independent claims. Preferred embodiments are defined in the dependent claims.

Accordingly, systems and methods for generating a request for information about selected objects are disclosed. A first query may be generated at a client computing device and submitted to a query translation system. The first query is written in a uniform format that is not unique to a particular object. The first query includes a plurality of classes of objects and a plurality of filters. Each filter corresponds to an associated class of objects and specifies selected objects in the corresponding class of objects.

The first query may be a self-discovery query that requests discoverable properties of selected objects. The first query may also be a data request query that requests information about specified properties of selected objects.

The query translation system translates the first query to a request for information about selected objects. In an exemplary translation process, the first query is parsed to identify the plurality of classes of objects and the plurality of filters. Each class of objects is associated with a class in a hierarchy of objects. Selected objects are identified based on the plurality of filters. The first query is translated to the request for information. The request is formatted for execution on a first object associated with a highest class of objects in the hierarchy of objects. The request is submitted to the first object.

The request is processed at the first object. Results of the request may be passed back to the client computing device. The client computing device may display results to the user and may store results in a memory for further processing. The results may be used in various aspects of database administration and query optimization.

### BRIEF DESCRIPTION OF THE DRAWINGS

The illustrative embodiments will be better understood after reading the following detailed description with reference to the appended drawings, in which:

Fig. 1 is an exemplary prior art data storage system;

Fig. 2 is a block diagram representing a general purpose computer system in which aspects of the present invention and/or portions thereof may be incorporated;

Fig. 3 is a block diagram of an exemplary system for generating a query for execution on an object in accordance with the present invention;

Fig. 4 is a block diagram of an exemplary query translation system in accordance with the present invention;

Fig. 5 is a flowchart of an exemplary method for generating a request for information about selected objects in accordance with the present invention; and

Fig. 6 is a flowchart of an exemplary method for identifying selected objects in accordance with the present invention.

### DETAILED DESCRIPTION

Systems and methods that meet the above-mentioned objects and provides other beneficial features in accordance with the presently preferred exemplary embodiments of the invention will be described below with reference to aforementioned Figures. Those skilled in the art will readily appreciate that the description given herein with respect to those figures is for explanatory purposes only and is not intended in any way to limit the scope of the invention. Throughout the description, like reference numerals will refer to like elements in the respective figures.

### Computer Environment

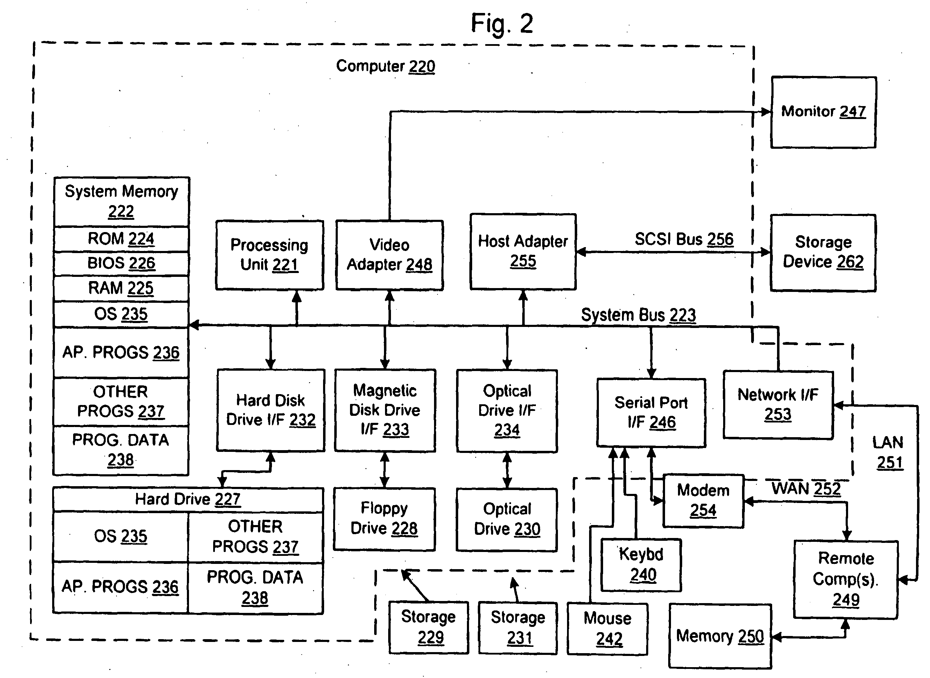

Fig. 2 and the following discussion are intended to provide a brief general description of a suitable computing environment in which the present invention and/or portions thereof may be implemented. Although not required, the invention is described in the general context of computer-executable instructions, such as program modules, being executed by a computer, such as a client workstation or a server. Generally, program modules include routines, programs, objects, components, data structures and the like that perform particular tasks or implement particular abstract data types. Moreover, it should be appreciated that the invention and/or portions thereof may be practiced with other computer system configurations, including hand-held devices, multi-processor systems, microprocessor-based or programmable consumer electronics, network PCs, minicomputers, mainframe computers and the like. The invention may also be practiced in distributed computing environments where tasks are performed by remote processing devices that are linked through a communications network. In a distributed computing environment, program modules may be located in both local and remote memory storage devices.

As shown in Fig. 2, an exemplary general purpose computing system includes a conventional personal computer 220 or the like, including a processing unit 221, a system memory 222, and a system bus 223 that couples various system components including the system memory to the processing unit 221. The system bus 223 may be any of several types of bus structures including a memory bus or memory controller, a peripheral bus, and a local bus using any of a variety of bus architectures. The system memory includes read-only memory (ROM) 224 and random access memory (RAM) 225. A basic input/output system 226 (BIOS), containing the basic routines that help to transfer information between elements within the personal computer 220, such as during start-up, is stored in ROM 224.

The personal computer 220 may further include a hard disk drive 227 for reading from and writing to a hard disk (not shown), a magnetic disk drive 228 for reading from or writing to a removable magnetic disk 229, and an optical disk drive 230 for reading from or writing to a removable optical disk 231 such as a CD-ROM or other optical media. The hard disk drive 227, magnetic disk drive 228, and optical disk drive 230 are connected to the system bus 223 by a hard disk drive interface 232, a magnetic disk drive interface 233, and an optical drive interface 234, respectively. The drives and their associated computer-readable media provide non-volatile storage of computer readable instructions, data structures, program modules and other data for the personal computer 220.

Although the exemplary environment described herein employs a hard disk, a removable magnetic disk 229, and a removable optical disk 231, it should be appreciated that other types of computer readable media which can store data that is accessible by a computer may also be used in the exemplary operating environment. Such other types of media include a magnetic cassette, a flash memory card, a digital video disk, a Bernoulli cartridge, a random access memory (RAM), a read-only memory (ROM), and the like.

A number of program modules may be stored on the hard disk, magnetic disk 229, optical disk 231, ROM 224 or RAM 225, including an operating system 235, one or more application programs 236, other program modules 237 and program data 238. A user may enter commands and information into the personal computer 220 through input devices such as a keyboard 240 and pointing device 242 such as a mouse. Other input devices (not shown) may include a microphone, joystick, game pad, satellite disk, scanner, or the like. These and other input devices are often connected to the processing unit 221 through a serial port interface 246 that is coupled to the system bus, but may be connected by other interfaces, such as a parallel port, game port, or universal serial bus (USB). A monitor 247 or other type of display device is also connected to the system bus 223 via an interface, such as a video adapter 248. In addition to the monitor 247, a personal computer typically includes other peripheral output devices (not shown), such as speakers and printers. The exemplary system of Fig. 2 also includes a host adapter 255. a Small Computer System Interface (SCSI) bus 256, and an external storage device 262 connected to the SCSI bus 256.

The personal computer 220 may operate in a networked environment using logical connections to one or more remote computers, such as a remote computer 249. The remote computer 249 may be another personal computer, a server, a router, a network PC, a peer device or other common network node, and typically includes many or all of the elements described above relative to the personal computer 220, although only a memory storage device 250 has been illustrated in Fig. 2. The logical connections depicted in Fig. 2 include a local area network (LAN) 251 and a wide area network (WAN) 252. Such networking environments are commonplace in offices, enterprise-wide computer networks, intranets, and the Internet.

When used in a LAN networking environment, the personal computer 220 is connected to the LAN 251 through a network interface or adapter 253. When used in a WAN networking environment, the personal computer 220 typically includes a modem 254 or other means for establishing communications over the wide area network 252, such as the Internet. The modem 254, which may be internal or external, is connected to the system bus 223 via the serial port interface 246. In a networked environment, program modules depicted relative to the personal computer 220, or portions thereof, may be stored in the remote memory storage device. It will be appreciated that the network connections shown are exemplary and other means of establishing a communications link between the computers may be used.

### Exemplary Systems and Methods of the Present Invention

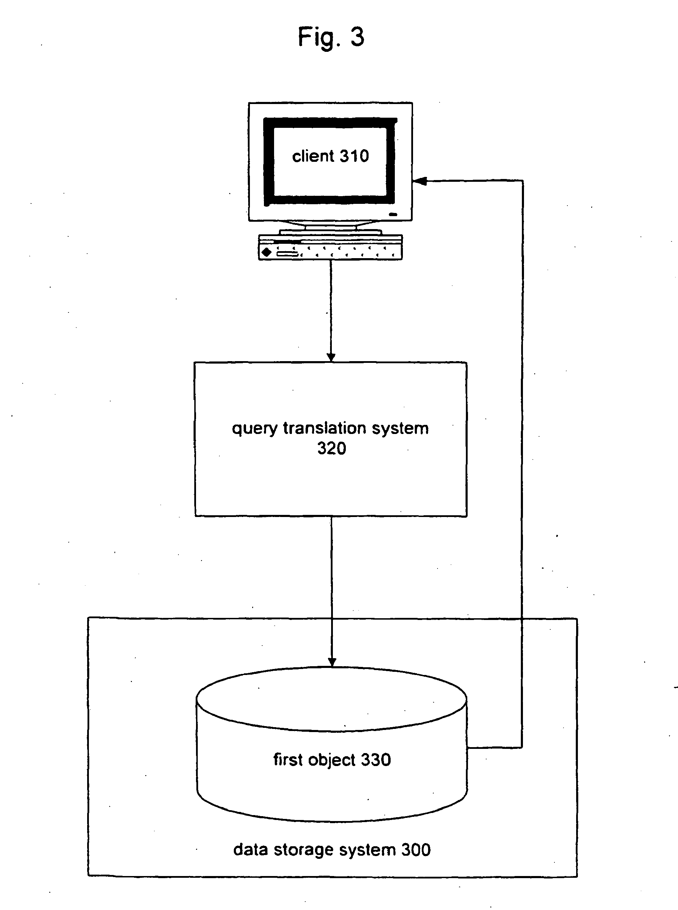

A block diagram of an exemplary system for generating a query for execution on an object in accordance with the present invention is shown in Fig. 3. As shown, the system includes client computing device 310, query translation system 320, data storage system 300, and first object 330. As should be appreciated, data storage system 300 may include any number of additional objects (not shown).

Generally, client 310 generates a first query written in a uniform format that is not unique to a particular object. Client 310 submits the first query to query translation system 320. Query translation system 320 translates the first query into a request for information formatted for processing on first object 330. Query translation system 320 submits the request to first object 330. First object 330 processes the request and may return results of the second query to client 310.

As shown in Fig. 3, client 310 generates a first query and submits the first query to query translation system 320. The first query is written in a uniform format that is not unique to a particular object. The first query includes a plurality of classes of objects such as, for example, the classes of objects in data storage system 100 of Fig. 1, including DBMS 110, database 130, and data tables 132-136. Each object has an associated set of properties. For example, a DBMS may have properties such as name, identifier, and version. A database may have properties such as size and space available. A data table may have properties such as creation date and row count.

The first query also includes a plurality of filters. Each filter corresponds to an associated class of objects and specifies selected objects in its associated class of objects. A filter may be "empty", meaning that all objects in the filter's associated class of objects are selected.

The first query may be either a general query or a restricted query. A general query includes an empty filter and requests information about all objects in a class of objects, while a restricted query requests information only about selected objects. An exemplary general query and restricted query are shown below:
general query
***DBMS[@Version=8.0]*/*Database[@Name='master']Table***
restricted query
***DBMS[@Version=8.0]*/*Database[@Name='master']Table[@RowCount=100]***

According to the example set forth above, the general query will return information about all data tables that are stored at the database named "Master" which is accessed through the DBMS version "8.0". The restricted query will return information about only data tables with a row count of 100 that are stored at the database named "Master" which is accessed through the DBMS version "8.0".

The first query may request various types of information about the selected objects. For example, a "self-discovery" query requests which properties are discoverable for the selected objects. Additionally a "data request" query may be used to follow up a self-discovery query. The data request query requests information about specified properties of the selected objects. For example, a self-discovery query may request which properties are discoverable for a selected table, and the results of the self discovery query may specify that creation date and row count are discoverable properties. A data request query may then request the row count of the selected table.

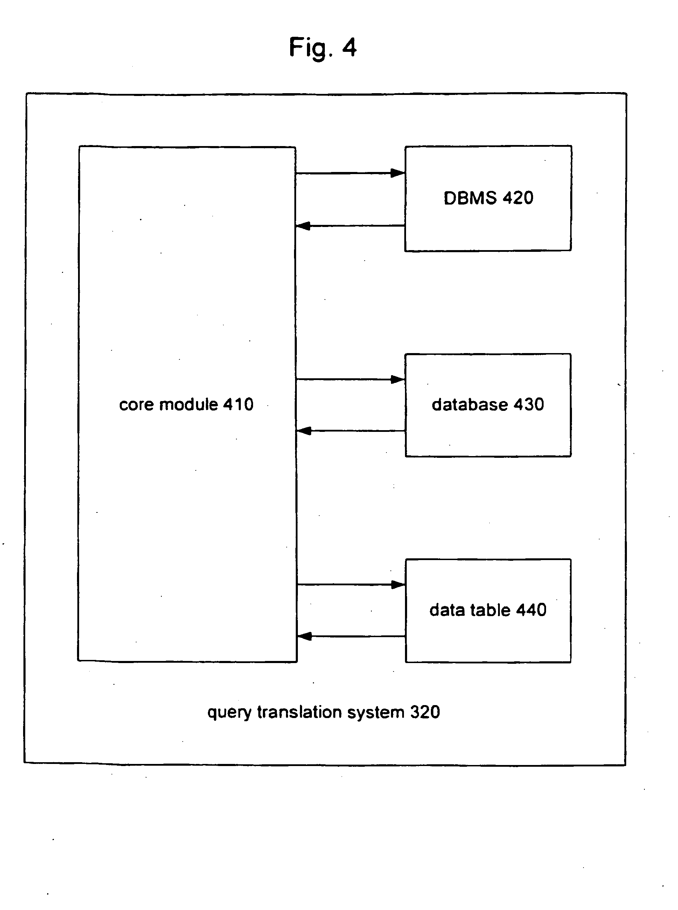

After the first query has been generated at client 310, the first query is submitted to query translation system 320. An exemplary query translation system 320 is described in detail below with reference to Fig. 4. Generally, query translation system 320 translates the first query to a request for information formatted for processing on first object 330. For example, if first object 330 is a DBMS that executes queries written in Structured Query Language (SQL), then query translation system 320 will translate the first query into a second query written in SQL.

After the request for information has been generated, it is submitted to first object 330 for processing at first object 330. First object 330 is an object on which requests for information about objects in data storage system 300 may be processed. For example, first object 330 may be a DBMS, an on-line analytical processing (OLAP) server, or a management instrumentation server. After the request for information has been executed at first object 330, the request results may be submitted to client 310. For a self-discovery query, the results include the discoverable properties of the selected objects. For a data request query, the results include information about specified properties of the selected objects. An exemplary first query and corresponding results are shown below:
first query:
***DBMS*/*Database[@Name='master']Table[@name='sales']***
***Request properties: Name, Creation Date, Row Count***

### results:

| **Name** | **Creation Date** | **Row Count** |
|---|---|---|
| Sales | March 1, 2003 | 100 |

The exemplary results shown above include information about the specified properties "Name, Creation Date, and Row Count" for the selected "Sales" table.

A block diagram of an exemplary query translation system in accordance with the present invention is shown in Fig. 4. As shown, exemplary query translation system 320 includes a core module 410 and a plurality of objects including DBMS 420, database 430, and data table 440. As should be appreciated, query translation system 320 may be modified to include additional objects depending on the data storage system for which it is configured. For example, if query translation system 320 were configured for a data storage system including an on-line analytical processing (OLAP) server and / or instrumentation management server connected to DBMS 100, then query translation system 320 may be modified to include an additional OLAP server and / or instrumentation management server. Furthermore, if the data storage system included information corresponding to columns of data tables, then query translation system 320 may be modified to include additional columns.

Query translation server 320 may be configured using a configuration file stored at core module 410. Such a configuration file is preferably written in extensible markup language (XML). The configuration file specifies the hierarchy of objects within the data storage system. If a class of objects is added to the data storage system, the configuration file may be edited to include the added class of objects and their corresponding properties. An exemplary configuration file corresponding to a data storage system for which query translation system 320 is configured is shown below:

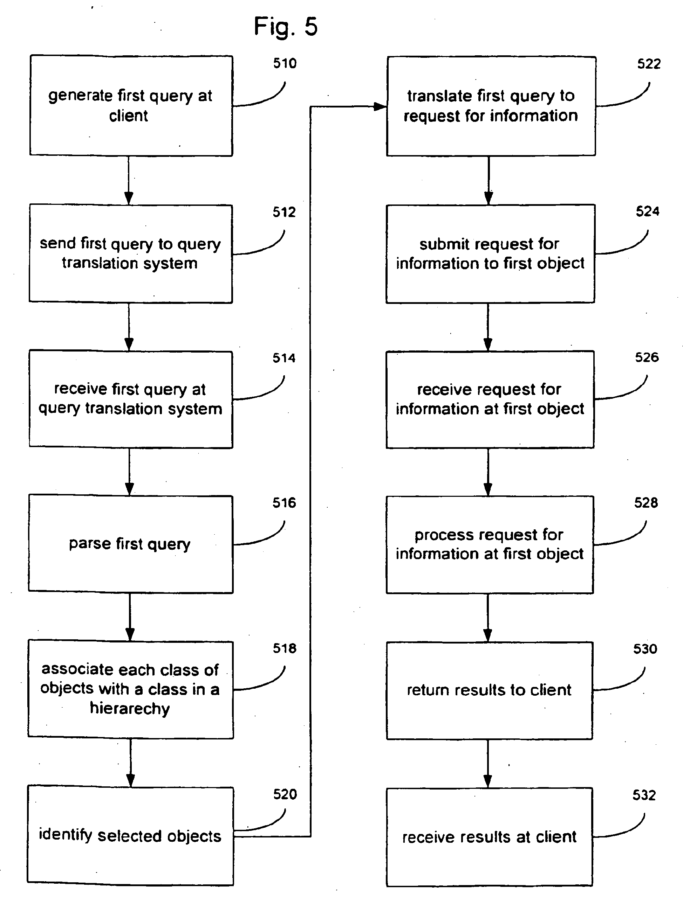

A flowchart of an exemplary method for generating a request for information about selected objects in accordance with the present invention is shown in Fig. 5. Generally, a first query may be generated at client 310. The first query is written in a uniform format that is not unique to a particular object. The first query is submitted to a query translation system 320, which translates the first query to the request for information, which is formatted for processing on first object 330. The request is submitted to first object 330 for execution at first object 330. Results of the request may be returned back to client 310.

As shown in Fig. 5, at step 510, client 310 generates a first query. The first query is written in a uniform format that is not unique to a particular object. The first query includes a plurality of classes of objects and a plurality of filters. Each filter corresponds to an associated class of objects and specifies selected objects in the corresponding class of objects.

The first query may be a self-discovery query that requests discoverable properties of selected objects. The first query may also be a data request query that requests information about specified properties of selected objects.

At step 512, client 310 sends the first query to query translation system 320, and, at step 514, the first query is received at query translation system 320.

At step 516, query translation system 320 parses the first query to identify the plurality of classes of objects and the plurality of filters.

At step 518, query translation system 320 associates each class of objects with a class in a hierarchy of objects. For example, for a first query including a DBMS class, a database class, and a data table class, query translation system 320 may associate the DBMS with a first class, the database with a second class, and the data tables with a third class. The hierarchy of objects may be specified in a configuration file that is preferably stored at query translation system 320.

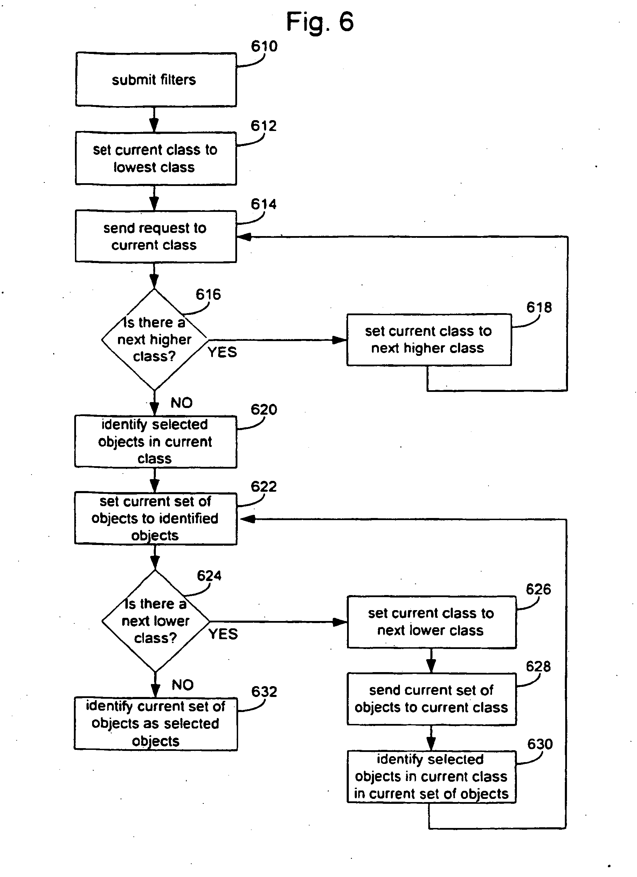

At step 520, query translation system 320 identifies the selected objects based on the plurality of filters. An exemplary method for identifying selected objects is discussed in detail below with reference to Fig. 6.

At step 522, query translation system 320 translates the first query to a request for information formatted for execution on first object 330, which is the object associated with the first class at step 518.

At step 524, query translation system 320 submits the request for information to first object 330, and, at step 526, the request for information is received at first object 330. At step 528, the request for information is processed at first object 330. At step 530, the results of the request for information are sent to client 310, and, at step 532, the results are received at client 310. Client 310 may display results to the user and may store results in a memory for further processing. The results may be used in various aspects of database administration and query optimization.

A flowchart of an exemplary method for identifying selected objects in accordance with the present invention is shown in Fig. 6. Generally, core module 410 sends each filter to its associated class of objects. Core module 410 then sends a request for selected objects to the lowest class of objects. The lowest class of objects, in turn, passes the request to each next higher class until the request reaches the highest class of objects. The highest class of objects identifies the selected objects in the highest class of objects specified in the corresponding filter. The highest class of objects, in turn, passes the identified objects to each lower class of objects. Each lower class identifies selected objects in its class of objects present on the identified objects passed from the previous higher class. Finally, the lowest class identifies selected objects in the lowest class of objects and submits the identified objects to core module 410.

As shown in Fig. 6, at step 610, core module 410 submits each filter to its corresponding class of objects 420-440.

At step 612, core module 410 sets a current class to the lowest class of objects 420. At step 614, core module 410 sends a request for selected objects to the current class. At step 616, it is determined if there is a next higher class of objects. For example, if the current class is set to data table 440, then the next higher class of objects is database 430. If the current class of objects is DBMS 420, then there is no next higher class of objects.

If there is a next higher class of objects, then, at step 618, current class is set to the next higher class of objects and the method returns to step 614.

If there is not a next higher class of objects, then, at step 620, the current class of objects identifies the selected objects in the current class specified by the corresponding filter. For example, for the first query, ***"DBMS[@Version=8.0]"*** the selected objects for DBMS class 420 are all DBMS's that are version "8.0".

At step 622, a current set of objects is set to the identified objects. At step 624, it is determined if there is a next lower class of objects. For example, if the current class is set to DBMS 420, then the next lower class of objects is database 430. If the current class of objects is data table 440, then there is no next lower class of objects.

If there is a next lower class of objects, then, at step 626, the current class is set to the next lower class of objects. At step 628, the current set of objects is sent to the current class. At step 630, the current class of objects identifies selected objects in the current class of objects specified by the corresponding filter that are present in the current set of objects. For example, for the first query. ***"DBMS[@Version=8.0]*/*****Database[@Name='master']**,* if the current class of objects is database class 430 and the current set of objects are all DBMS's that are version "8.0", then the selected objects present in the current set of objects are all databases named "Master" that are present on a DBMS that is version "8.0". After execution of step 630, the method returns to step 622.

If there is not a next lower class of objects, then, at step 632, the current set of objects is identified as the selected objects for the request for information.

While the present invention has been described in connection with the preferred embodiments of the various figures, it is to be understood that other similar embodiments may be used or modifications and additions may be made to the described embodiment for performing the same function of the present invention without deviating therefrom. For example, while the present invention is described in terms of a DBMS object module, a database object module, and a data table object module, the present invention may be implemented with any number of object modules corresponding to any associated objects. Therefore, the present invention should not be limited to any single embodiment, but rather should be construed in breadth and scope in accordance with the appended claims.

## Claims

1. A method for generating a request for information about selected objects, the method comprising:
parsing a first query to identify a plurality of classes of objects and a plurality of filters, each filter corresponding to an associated class of objects and specifying selected objects in its associated class of objects (516);
associating each class of objects with a class in a hierarchy of objects (518);
identifying the selected objects based on the plurality of filters (520), comprising:
(a) submitting each filter to its associated class of objects (610);
(b) setting a current class to the lowest class of objects (612);
(c) sending a request for selected objects to an object corresponding to the current class(614);
(d) determining if there is a next higher class of objects (616);
(e) if so, then:
setting the current class to the next higher class of objects (618); and returning to step (c);
(f) if not, then identifying selected objects in the current class of objects specified by the corresponding filter (620);
(g) setting a current set of objects to be the identified objects in the current class of objects (622);
(h) determining if there is a next lower class of objects (624):
(i) if so, then:
setting the current class to the next lower class of objects (626);
sending the current set of objects to the current class (628);
identifying objects in the current class of objects present in the current set of objects specified by the corresponding filter (630);
setting the current set of objects to be the objects in the current class present in the current set of objects specified by the corresponding filter (622); and
returning to step (h);
(j) if not then identifying the current set of objects as the selected objects (632);
translating the first query to the request for information whereby the request is formatted for processing on a first object associated with a highest class of objects in the hierarchy of objects (522); and
submitting the request to the first object (524).

2. The method of claim 1, wherein associating each object with a class of objects in a hierarchy of objects comprises associating each object with a class of objects in a hierarchy of objects specified in a configuration file.

3. The method of claim 1, wherein parsing a first query to identify a plurality of classes of objects comprises parsing a first query to identify a database management system class, a database class, and a data table class.

4. The method of claim 3, wherein associating each class of objects with a class in a hierarchy of objects, comprises:
associating the database management system class with a first class of objects in a hierarchy of objects;
associating the database class with a second class of objects in a hierarchy of objects; and
associating the data table class with a third class of objects in a hierarchy of objects.

5. The method of claim 3, wherein translating the first query to the request for information comprises translating the first query to a second query formatted for execution on the database management system.

6. The method of claim 1, wherein translating the first query to the request for information comprises translating the first query to a request for which properties of the selected objects are discoverable.

7. The method of claim 1, wherein translating the first query to a request for information about selected objects comprises translating the first query to a request for information about specified properties of the selected objects.

8. A computer readable medium having stored thereon computer readable instructions for performing the following steps:
parsing a first query to identify a plurality of classes of objects and a plurality of filters, each filter corresponding to an associated class of objects and specifying selected objects in its associated class of objects (516);
associating each class of objects with a class in a hierarchy of objects (518);
identifying selected objects based on the plurality of filters (520), comprising:
(a) submitting each filter to its associated class of objects (610);
(b) setting a current class to the lowest class of objects (612);
(c) sending a request for selected objects to an object corresponding to the current class (614);
(d) determining if there is a next higher class of objects (616);
(e) if so, then:
setting the current class to the next higher class of objects (618); and
returning to step (c);
(f) if not, then identifying selected objects in the current class of objects specified by the corresponding filter (620);
(g) setting a current set of objects to be the identified objects in the current class of objects (622);
(h) determining if there is a next lower class of objects (624);
(i) if so, then:
setting the current class to the next lower class of objects (626);
sending the current set of objects to the current class (628);
identifying objects in the current class of objects present in the current set of objects specified by the corresponding filter (630);
setting the current set of objects to be the objects in the current class present in the current set of objects specified by the corresponding filter (622); and
returning to step (h);
(j) if not then identifying the current set of objects as the selected objects (632);
translating the first query to a request for information about the selected objects whereby the request is formatted for processing on a first object associated with a highest class of objects in the hierarchy of objects (522); and
submitting the request to the first object (524).

9. The computer readable medium of claim 8, wherein associating each object with a class of objects in a hierarchy of objects comprises associating each object with a class of objects in a hierarchy of objects specified in a configuration file.

10. The computer readable medium of claim 8, wherein parsing a first query to identify a plurality of classes of objects comprises parsing a first query to identify a database management system class, a database class, and a data table class.

11. The computer readable medium of claim 10. wherein associating each class of objects with a class in a hierarchy of objects, comprises:
associating the database management system class with a first class of objects in a hierarchy of objects;
associating the database class with a second class of objects in a hierarchy of objects; and
associating the data table class with a third class of objects in a hierarchy of objects.

12. The computer readable medium of claim 10, wherein translating the first query to a request for information comprises translating the first query to a second query formatted for execution on the database management system.

13. The computer readable medium of claim 8, wherein translating the first query to a request for information comprises translating the first query to a request for which properties of the selected objects are discoverable.

14. The computer readable medium of claim 8, wherein translating the first query to a request for information comprises translating the first query to a request for information about specified properties of the selected objects.

15. A system for generating a request for information about selected objects, the system comprising:
a query translation system comprising:
a processor operative to execute computer executable instructions; and
a memory having stored therein computer executable instructions for performing the following steps:
parsing a first query to identify a plurality of classes of objects and a plurality of filters, each filter corresponding to an associated class of objects and specifying selected objects in its associated class of objects (516);
associating each class of objects with a class in a hierarchy of objects (518);
identifying the selected objects based on the plurality of filters (520), comprising computer executable instructions for performing the steps of:
(a) submitting each filter to its associated class of objects (610);
(b) setting a current class to the lowest class of objects (612);
(c) sending a request for selected objects to an object corresponding to the current class(614);
(d) determining if there is a next higher class of objects (616);
(e) if so, then:
setting the current class to the next higher class of objects (618); and
returning to step (c);
(f) if not, then identifying selected objects in the current class of objects specified by the corresponding filter (620);
(g) setting a current set of objects to be the identified objects in the current class of objects (622);
(h) determining if there is a next lower class of objects (624);
(i) if so, then:
setting the current class to the next lower class of objects (626);
sending the current set of objects to the current class (628);
identifying objects in the current class of objects present in the current set of objects specified by the corresponding filter (630);
setting the current set of objects to be the objects in the current class present in the current set of objects specified by the corresponding filter (622); and
returning to step (h);
(j) if not then identifying the current set of objects as the selected objects (632);
translating the first query to the request for information whereby the request is formatted for processing on a first object associated with a highest class of objects in the hierarchy of objects (522); and
submitting the request to the first object (524); and
the first object for processing the request for information (528).

16. The system of claim 15, further comprising a configuration file specifying the hierarchy of objects.

17. The system of claim 15, wherein the plurality of classes of objects comprises a database management system class, a database class, and a data table class.

18. The system of claim 17, wherein:
the database management system class is associated with a first class of objects in the hierarchy of objects;
the database class is associated with a second class of objects in the hierarchy of objects; and
the data table class is associated with a third class of objects in the hierarchy of objects.

19. The system of claim 17, wherein the request for information is a second query formatted for execution on the database management system.

20. The system of claim 15, wherein the request for information is a request for which properties of the selected objects are discoverable.

21. The system of claim 15, wherein the request for information is a request for information about specified properties of the selected objects.

22. The system of claim 15, further comprising a client computing device for performing the following steps:
generating the first query; and
receiving results of request for information from the first object.

## Patentansprüche

1. Verfahren zum Erzeugen einer Anfrage nach Informationen über ausgewählte Objekte, wobei das Verfahren umfasst:
Parsen einer ersten Abfrage, um eine Vielzahl von Klassen von Objekten und eine Vielzahl von Filtern zu identifizieren, wobei jedes Filter einer zugeordneten Klasse von Objekten entspricht und ausgewählte Objekte in seiner zugeordneten Klasse von Objekten (516) festlegt;
Zuordnen jeder Klasse von Objekten zu einer Klasse in einer Hierarchie von Objekten (518);
Identifizieren der gewählten Objekte auf der Basis der Vielzahl von Filtern (520), beinhaltend:
(a) Bereitstellen jedes Filters für seine zugeordnete Klasse von Objekten (610);
(b) Einstellen einer momentanen Klasse auf die niedrigste Klasse von Objekten (612);
(c) Senden einer Anfrage nach gewählten Objekten zu einem Objekt, das der momentanen Klasse (614) entspricht;
(d) Ermitteln, ob es eine nächst höhere Klasse von Objekten (616) gibt;
(e) wenn dies der Fall ist, dann: Einstellen der momentanen Klasse auf die nächst höhere Klasse von Objekten (618) und Zurückkehren zu Schritt (c);
(f) wenn dies nicht der Fall ist, Identifizieren der gewählten Objekte in der momentanen Klasse von Objekten, die durch das entsprechende Filter (620) festgelegt werden;
(g) Einstellen eines momentanen Satzes von Objekten als die identifizierten Objekte in der momentanen Klasse von Objekten (622);
(h) Ermitteln, ob es eine nächst niedrigere Klasse von Objekten (624) gibt;
(i) wenn dies der Fall ist, dann: Einstellen der momentanen Klasse auf die nächst niedrigere Klasse von Objekten (626);
Senden des momentanen Satzes von Objekten zur momentanen Klasse (628);
Identifizieren von Objekten in der momentanen Klasse von Objekten, die im momentanen Satz von Objekten vorhanden sind, die durch das entsprechende Filter (630) festgelegt werden;
Einstellen des momentanen Satzes von Objekten als die Objekte in der momentanen Klasse, die im momentanen Satz von Objekten vorhanden sind, die durch das entsprechende Filter (622) festgelegt werden; und Zurückkehren zu Schritt (h);
(j) wenn dies nicht der Fall ist, Identifizieren des momentanen Satzes von Objekten als die gewählten Objekte (632);
Übersetzen der ersten Abfrage zu der Anfrage nach Informationen, wobei die Anfrage für die Verarbeitung an einem ersten Objekt formatiert wird, das einer höchsten Klasse von Objekten in der Hierarchie von Objekten (522) zugeordnet ist, und
Bereitstellen der Anfrage für das erste Objekt (524).

2. Verfahren nach Anspruch 1, bei dem das Zuordnen jedes Objektes zu einer Klasse von Objekten in einer Hierarchie von Objekten das Zuordnen jedes Objektes zu einer Klasse von Objekten in einer Hierarchie von Objekten beinhaltet, die in einer Konfigurationsdatei festgelegt ist.

3. Verfahren nach Anspruch 1, bei dem das Parsen einer ersten Abfrage zur Identifikation einer Vielzahl von Klassen von Objekten das Parsen einer ersten Abfrage beinhaltet, um eine Datenbank-Verwaltungssystemklasse, eine Datenbankklasse und eine Datentabellenklasse zu identifizieren.

4. Verfahren nach Anspruch 3, bei dem das Zuordnen jeder Klasse von Objekten zu einer Klasse in einer Hierarchie von Objekten beinhaltet:
Zuordnen der Datenbank-Verwaltungssystemklasse zu einer ersten Klasse von Objekten in einer Hierarchie von Objekten;
Zuordnen der Datenbankklasse zu einer zweiten Klasse von Objekten in einer Hierarchie von Objekten; und
Zuordnen der Datentabellenklasse zu einer dritten Klasse von Objekten in einer Hierarchie von Objekten.

5. Verfahren nach Anspruch 3, bei dem das Übersetzen der ersten Abfrage zu der Anfrage nach Informationen das Übersetzen der ersten Abfrage zu einer zweiten Abfrage beinhaltet, die für die Ausführung im Datenbank-Verwaltungssystem formatiert wird.

6. Verfahren nach Anspruch 1, bei dem das Übersetzen der ersten Abfrage zu der Anfrage nach Informationen das Übersetzen der ersten Abfrage zu einer Anfrage beinhaltet, für die Eigenschaften der ausgewählten Objekte feststellbar sind.

7. Verfahren nach Anspruch 1, bei dem das Übersetzen der ersten Abfrage zu einer Anfrage nach Informationen über gewählte Objekte das Übersetzen der ersten Abfrage zu einer Anfrage nach Informationen über festgelegte Eigenschaften der gewählten Objekte beinhaltet.

8. Computerlesbares Medium, auf dem computerlesbare Anweisungen für die Ausführung der folgenden Schritte gespeichert sind:
Parsen einer ersten Abfrage, um eine Vielzahl von Klassen von Objekten und eine Vielzahl von Filtern zu identifizieren, wobei jedes Filter einer zugeordneten Klasse von Objekten entspricht und ausgewählte Objekte in seiner zugeordneten Klasse von Objekten (516) festlegt;
Zuordnen jeder Klasse von Objekten zu einer Klasse in einer Hierarchie von Objekten (518);
Identifizieren gewählter Objekte auf der Basis der Vielzahl von Filtern (520), beinhaltend:
(a) Bereitstellen jedes Filters für seine zugeordnete Klasse von Objekten (610);
(b) Einstellen einer momentanen Klasse auf die niedrigste Klasse von Objekten (612);
(c) Senden einer Anfrage nach gewählten Objekten zu einem Objekt, das der momentanen Klasse (614) entspricht;
(d) Ermitteln, ob es eine nächst höhere Klasse von Objekten (616) gibt;
(e) wenn dies der Fall ist, dann: Einstellen der momentanen Klasse auf die nächst höhere Klasse von Objekten (618) und Zurückkehren zu Schritt (c);
(f) wenn dies nicht der Fall ist, Identifizieren der gewählten Objekte in der momentanen Klasse von Objekten, die durch das entsprechende Filter (620) festgelegt werden;
(g) Einstellen eines momentanen Satzes von Objekten als die identifizierten Objekte in der momentanen Klasse von Objekten (622);
(h) Ermitteln, ob es eine nächst niedrigere Klasse von Objekten (624) gibt;
(i) wenn dies der Fall ist, dann: Einstellen der momentanen Klasse auf die nächst niedrigere Klasse von Objekten (626);
Senden des momentanen Satzes von Objekten zur momentanen Klasse (628);
Identifizieren von Objekten in der momentanen Klasse von Objekten, die im momentanen Satz von Objekten vorhanden sind, die durch das entsprechende Filter (630) festgelegt werden;
Einstellen des momentanen Satzes von Objekten als die Objekte in der momentanen Klasse, die im momentanen Satz von Objekten vorhanden sind, die durch das entsprechende Filter (622) festgelegt werden; und Zurückkehren zu Schritt (h);
(j) wenn dies nicht der Fall ist, Identifizieren des momentanen Satzes von Objekten als die gewählten Objekte (632);
Übersetzen der ersten Abfrage zu der Anfrage nach Informationen über die ausgewählten Objekte, wobei die Anfrage für die Verarbeitung an einem ersten Objekt formatiert wird, das einer höchsten Klasse von Objekten in der Hierarchie von Objekten (522) zugeordnet ist, und
Bereitstellen der Anfrage für das erste Objekt (524).

9. Computerlesbares Medium nach Anspruch 8, bei dem das Zuordnen jedes Objektes zu einer Klasse von Objekten in einer Hierarchie von Objekten, das Zuordnen jedes Objektes zu einer Klasse von Objekten in einer Hierarchie von Objekten beinhaltet, die in einer Konfigurationsdatei festgelegt ist.

10. Computerlesbares Medium nach Anspruch 8, bei dem das Parsen einer ersten Abfrage zur Identifikation einer Vielzahl von Klassen von Objekten das Parsen einer ersten Abfrage beinhaltet, um eine Datenbank-Verwaltungssystemklasse, eine Datenbankklasse und eine Datentabellenklasse zu identifizieren.

11. Computerlesbares Medium nach Anspruch 10, bei dem das Zuordnen jeder Klasse von Objekten zu einer Klasse in einer Hierarchie von Objekten beinhaltet:
Zuordnen der Datenbank-Verwaltungssystemklasse zu einer ersten Klasse von Objekten in einer Hierarchie von Objekten;
Zuordnen der Datenbankklasse zu einer zweiten Klasse von Objekten in einer Hierarchie von Objekten; und
Zuordnen der Datentabellenklasse zu einer dritten Klasse von Objekten in einer Hierarchie von Objekten.

12. Computerlesbares Medium nach Anspruch 10, bei dem das Übersetzen der ersten Abfrage zu einer Anfrage nach Informationen das Übersetzen der ersten Abfrage zu einer zweiten Abfrage beinhaltet, die für die Ausführung im Datenbank-Verwaltungssystem formatiert wird.

13. Computerlesbares Medium nach Anspruch 8, bei dem das Übersetzen der ersten Abfrage zu einer Anfrage nach Informationen das Übersetzen der ersten Abfrage zu einer Anfrage beinhaltet, für die Eigenschaften der ausgewählten Objekte feststellbar sind.

14. Computerlesbares Medium nach Anspruch 8, bei dem das Übersetzen der ersten Abfrage zu einer Anfrage nach Informationen das Übersetzen der ersten Abfrage zu einer Anfrage nach Informationen über festgelegte Eigenschaften der gewählten Objekte beinhaltet.

15. System zum Erzeugen einer Anfrage nach Informationen über ausgewählte Objekte, wobei das System enthält:
ein Abfrageübersetzungssystem, enthaltend:
einen Prozessor der in Funktion von einem Computer ausführbare Anweisungen ausführt; und
einen Speicher, in dem von einem Computer ausführbare Anweisungen gespeichert sind, um die folgenden Schritte auszuführen:
Parsen einer ersten Abfrage, um eine Vielzahl von Klassen von Objekten und eine Vielzahl von Filtern zu identifizieren, wobei jedes Filter einer zugeordneten Klasse von Objekten entspricht und ausgewählte Objekte in seiner zugeordneten Klasse von Objekten (516) festlegt;
Zuordnen jeder Klasse von Objekten zu einer Klasse in einer Hierarchie von Objekten (518);
Identifizieren der gewählten Objekte auf der Basis der Vielzahl von Filtern (520), beinhaltend von einem Computer ausführbare Anweisungen für die Ausführung der folgenden Schritte:
(a) Bereitstellen jedes Filters für seine zugeordnete Klasse von Objekten (610);
(b) Einstellen einer momentanen Klasse auf die niedrigste Klasse von Objekten (612);
(c) Senden einer Anfrage nach gewählten Objekten zu einem Objekt, das der momentanen Klasse (614) entspricht;
(d) Ermitteln, ob es eine nächst höhere Klasse von Objekten (616) gibt;
(e) wenn dies der Fall ist, dann: Einstellen der momentanen Klasse auf die nächst höhere Klasse von Objekten (618) und Zurückkehren zu Schritt (c);
(f) wenn dies nicht der Fall ist, Identifizieren der gewählten Objekte in der momentanen Klasse von Objekten, die durch das entsprechende Filter (620) festgelegt werden;
(g) Einstellen eines momentanen Satzes von Objekten als die identifizierten Objekte in der momentanen Klasse von Objekten (622);
(h) Ermitteln, ob es eine nächst niedrigere Klasse von Objekten (624) gibt;
(i) wenn dies der Fall ist, dann: Einstellen der momentanen Klasse auf die nächst niedrigere Klasse von Objekten (626);
Senden des momentanen Satzes von Objekten zur momentanen Klasse (628);
Identifizieren von Objekten in der momentanen Klasse von Objekten, die im momentanen Satz von Objekten vorhanden sind, die durch das entsprechende Filter (630) festgelegt werden;
Einstellen des momentanen Satzes von Objekten als die Objekte in der momentanen Klasse, die im momentanen Satz von Objekten vorhanden sind, die durch das entsprechende Filter (622) festgelegt werden; und Zurückkehren zu Schritt (h);
(j) wenn dies nicht der Fall ist, Identifizieren des momentanen Satzes von Objekten als die gewählten Objekte (632);
Übersetzen der ersten Abfrage zu der Anfrage nach Informationen, wobei die Anfrage für die Verarbeitung an einem ersten Objekt formatiert wird, das einer höchsten Klasse von Objekten in der Hierarchie von Objekten (522) zugeordnet ist, und
Bereitstellen der Anfrage für das erste Objekt (524) und
des ersten Objektes für die Verarbeitung der Anfrage nach Informationen (528).

16. System nach Anspruch 15, weiterhin enthaltend eine Konfigurationsdatei, die die Hierarchie von Objekten festlegt.

17. System nach Anspruch 15, bei dem die Vielzahl von Klassen von Objekten eine Datenbank-Verwaltungssystemklasse, eine Datenbankklasse und eine Datentabellenklasse enthält.

18. System nach Anspruch 17, bei dem:
die Datenbank-Verwaltungssystemklasse einer ersten Klasse von Objekten in der Hierarchie von Objekten zugeordnet ist;
die Datenbankklasse einer zweiten Klasse von Objekten in der Hierarchie von Objekten zugeordnet ist; und
die Datentabellenklasse einer dritten Klasse von Objekten in der Hierarchie von Objekten zugeordnet ist.

19. System nach Anspruch 17, bei dem die Anfrage nach Informationen eine zweite Abfrage ist, die für die Ausführung im Datenbank-Verwaltungssystem formatiert ist.

20. System nach Anspruch 15, bei dem die Anfrage nach Informationen eine Anfrage ist, für die Eigenschaften der gewählten Objekte feststellbar sind.

21. System nach Anspruch 15, bei dem die Anfrage nach Informationen eine Anfrage nach Informationen über festgelegte Eigenschaften der ausgewählten Objekte ist.

22. System nach Anspruch 15, weiterhin enthaltend eine Client-Computervorrichtung für die Ausführung der folgenden Schritte:
Erzeugen einer ersten Abfrage und
Empfangen von Ergebnissen von Anfragen nach Informationen vom dem ersten Objekt.

## Revendications

1. Procédé pour générer une requête d'informations concernant des objets sélectionnés, le procédé comprenant :
l'analyse syntaxiquement d'une première interrogation pour identifier plusieurs classes d'objets et plusieurs filtres, chaque filtre correspondant à une classe d'objets associée et spécifiant des objets sélectionnés dans sa classe d'objets associée (516) ;
l'association de chaque classe d'objets à une classe dans une hiérarchie d'objets (518) ;
l'identification des objets sélectionnés sur la base des filtres (520), comprenant :
(a) la soumission de soumettre chaque filtre à sa classe d'objets associée (610) ;
(b) le positionnement d'une classe courante sur la classe d'objets la plus basse (612) ;
(c) l'envoi d'une requête d'objets sélectionnés à un objet correspondant à la classe courante (614) ;
(d) la détermination s'il existe une classe d'objets immédiatement supérieure (616) ;
(e) si tel est le cas, alors
positionner la classe courante sur la classe d'objets immédiatement supérieure (618) ; et reprendre à l'étape (c) ;
(f) si tel n'est pas le cas, identifier alors des objets sélectionnés contenus dans la classe d'objets courante spécifiée par le filtre correspondant (620) ;
(g) positionner un ensemble d'objets courant de sorte qu'ils soient les objets identifiés dans la classe d'objets courante (622) ;
(h) déterminer s'il existe une classe d'objets immédiatement inférieure (624) ;
(i) si tel est le cas, alors :
positionner la classe courante sur la classe d'objets immédiatement inférieure (626) ;
envoyer l'ensemble d'objets courant à la classe courante (628) ;
identifier des objets de la classe d'objets courante qui sont présents dans l'ensemble d'objets courant spécifié par le filtre correspondant (630) ;
positionner l'ensemble d'objets courant de sorte qu'ils soient les objets de la classe courante présents dans l'ensemble d'objets courant spécifié par le filtre correspondant (622) ; et reprendre à l'étape (h) ;
(j) si tel n'est pas le cas, identifier alors l'ensemble d'objets courant comme étant les objets sélectionnés (632) ;
traduire la première interrogation en la requête d'informations, la requête étant ainsi formatée en vue d'un traitement sur un premier objet associé à une classe d'objets la plus haute de la hiérarchie d'objets (522) ; et
soumettre la requête au premier objet (524).

2. Procédé selon la revendication 1, dans lequel associer chaque objet à une classe d'objets dans une hiérarchie d'objets comprend l'association de chaque objet à une classe d'objets dans une hiérarchie d'objets spécifiée dans un fichier de configuration.

3. Procédé selon la revendication 1, dans lequel analyser syntaxiquement une première interrogation pour identifier plusieurs classes d'objets comprend l'analyse syntaxiquement d'une première interrogation pour identifier une classe de système de gestion de base de données, d'une classe de base de données, et d'une classe de table de données.

4. Procédé selon la revendication 3, dans lequel associer chaque classe d'objets à une classe dans une hiérarchie d'objets comprend :
l'association de la classe de système de gestion de base de données à une première classe d'objets dans une hiérarchie d'objets ;
l'association de la classe de base de données à une seconde classe d'objets dans une hiérarchie d'objets ; et
l'association de la classe de table de données à une troisième classe d'objets dans une hiérarchie d'objets.

5. Procédé selon la revendication 3, dans lequel traduire la première interrogation en la requête d'informations comprend la traduction de la première interrogation en une seconde interrogation formatée en vue d'une exécution sur le système de gestion de base de données.

6. Procédé selon la revendication 1, dans lequel traduire la première interrogation en la requête d'informations comprend la traduction de la première interrogation en une requête pour laquelle les propriétés des objets sélectionnés sont découvrables.

7. Procédé selon la revendication 1, dans lequel traduire la première interrogation en une requête d'informations concernant des objets sélectionnés comprend la traduction de la première interrogation en une requête d'informations concernant des propriétés spécifiées des objets sélectionnés.

8. Support lisible par ordinateur dans lequel sont stockées des instructions lisibles par ordinateur pour exécuter les étapes suivantes comprenant :
l'analyse syntaxiquement d'une première interrogation pour identifier plusieurs classes d'objets et plusieurs filtres, chaque filtre correspondant à une classe d'objets associée et spécifiant des objets sélectionnés dans sa classe d'objets associée (516) ;
l'association de chaque classe d'objets à une classe dans une hiérarchie d'objets (518) ;
l'identification des objets sélectionnés sur la base des filtres (520), comprenant :
(a) la soumission de chaque filtre à sa classe d'objets associée (610) ;
(b) le positionnement d'une classe courante sur la classe d'objets la plus basse (612) ;
(c) l'envoi d'une requête d'objets sélectionnés à un objet correspondant à la classe courante (614) ;
(d) la détermination s'il existe une classe d'objets immédiatement supérieure (616) ;
(e) si tel est le cas, alors
positionner la classe courante sur la classe d'objets immédiatement supérieure (618) ; et reprendre à l'étape (c) ;
(f) si tel n'est pas le cas, identifier alors des objets sélectionnés contenus dans la classe d'objets courante spécifiée par le filtre correspondant (620) ;
(g) positionner un ensemble d'objets courant de sorte qu'ils soient les objets identifiés dans la classe d'objets courante (622) ;
(h) déterminer s'il existe une classe d'objets immédiatement inférieure (624) ;
(i) si tel est le cas, alors :
positionner la classe courante sur la classe d'objets immédiatement inférieure (626) ;
envoyer l'ensemble d'objets courant à la classe courante (628) ;
identifier des objets de la classe d'objets courante qui sont présents dans l'ensemble d'objets courant spécifié par le filtre correspondant (630) ;
positionner l'ensemble d'objets courant de sorte qu'ils soient les objets de la classe courante présents dans l'ensemble d'objets courant spécifié par le filtre correspondant (622) ; et reprendre à l'étape (h) ;
(j) si tel n'est pas le cas, identifier alors l'ensemble d'objets courant comme étant les objets sélectionnés (632) ;
traduire la première interrogation en une requête d'informations concernant les objets sélectionnés, la requête étant ainsi formatée en vue d'un traitement sur un premier objet associé à une classe d'objets la plus haute de la hiérarchie d'objets (522) ; et
soumettre la requête au premier objet (524).

9. Support lisible par ordinateur selon la revendication 8, dans lequel associer chaque objet à une classe d'objets dans une hiérarchie d'objets comprend l'association de chaque objet à une classe d'objets dans une hiérarchie d'objets spécifiée dans un fichier de configuration.

10. Support lisible par ordinateur selon la revendication 8, dans lequel analyser syntaxiquement une première interrogation pour identifier plusieurs classes d'objets comprend l'analyse syntaxiquement d'une première interrogation pour identifier une classe de système de gestion de base de données, d'une classe de base de données, et d'une classe de table de données.

11. Support lisible par ordinateur selon la revendication 10, dans lequel associer chaque classe d'objets à une classe dans une hiérarchie d'objets comprend :
l'association de la classe de système de gestion de base de données à une première classe d'objets dans une hiérarchie d'objets ;
l'association de la classe de base de données à une seconde classe d'objets dans une hiérarchie d'objets ; et
l'association de la classe de table de données à une troisième classe d'objets dans une hiérarchie d'objets.

12. Support lisible par ordinateur selon la revendication 10, dans lequel traduire la première interrogation en une requête d'informations comprend la traduction de la première interrogation en une seconde interrogation formatée en vue d'une exécution sur le système de gestion de base de données.

13. Support lisible par ordinateur selon la revendication 8, dans lequel traduire la première interrogation en une requête d'informations comprend la traduction de la première interrogation en une requête pour laquelle les propriétés des objets sélectionnés sont découvrables.

14. Support lisible par ordinateur selon la revendication 8, dans lequel traduire la première interrogation en une requête d'informations comprend la traduction de la première interrogation en une requête d'informations concernant des propriétés spécifiées des objets sélectionnés.

15. Système pour générer une requête d'informations concernant des objets sélectionnés, le système comprenant :
un système de traduction d'interrogation comprenant :
un processeur apte à exécuter des instructions exécutables par ordinateur ; et
une mémoire dans laquelle sont stockées des instructions exécutables par ordinateur pour mettre en oeuvre les étapes suivantes comprenant :
l'analyse syntaxiquement d'une première interrogation pour identifier plusieurs classes d'objets et plusieurs filtres, chaque filtre correspondant à une classe d'objets associée et spécifiant des objets sélectionnés dans sa classe d'objets associée (516) ;
l'association de chaque classe d'objets à une classe dans une hiérarchie d'objets (518) ;
l'identification des objets sélectionnés sur la base des filtres (520), comprenant des instructions exécutables par ordinateur pour mettre en oeuvre les étapes consistant à :
(a) la soumission de chaque filtre à sa classe d'objets associée (610) ;
(b) le positionnement d'une classe courante sur la classe d'objets la plus basse (612) ;
(c) l'envoi d'une requête d'objets sélectionnés à un objet correspondant à la classe courante (614) ;
(d) la détermination s'il existe une classe d'objets immédiatement supérieure (616) ;
(e) si tel est le cas, alors
positionner la classe courante sur la classe d'objets immédiatement supérieure (618) ; et reprendre à l'étape (c) ;
(f) si tel n'est pas le cas, identifier alors des objets sélectionnés contenus dans la classe d'objets courante spécifiée par le filtre correspondant (620) ;
(g) positionner un ensemble d'objets courant de sorte qu'ils soient les objets identifiés dans la classe d'objets courante (622) ;
(h) déterminer s'il existe une classe d'objets immédiatement inférieure (624) ;
(i) si tel est le cas, alors :
positionner la classe courante sur la classe d'objets immédiatement inférieure (626) ;
envoyer l'ensemble d'objets courant à la classe courante (628) ;
identifier des objets de la classe d'objets courante qui sont présents dans l'ensemble d'objets courant spécifié par le filtre correspondant (630) ;
positionner l'ensemble d'objets courant de sorte qu'ils soient les objets de la classe courante présents dans l'ensemble d'objets courant spécifié par le filtre correspondant (622) ; et reprendre à l'étape (h) ;
(j) si tel n'est pas le cas, identifier alors l'ensemble d'objets courant comme étant les objets sélectionnés (632) ;
traduire la première interrogation en la requête d'informations, la requête étant ainsi formatée en vue d'un traitement sur un premier objet associé à une classe d'objets la plus haute de la hiérarchie d'objets (522) ; et
soumettre la requête au premier objet (524) ; et
le premier objet pour traiter la demande d'informations (528).

16. Système selon la revendication 15, comprenant en outre un fichier de configuration spécifiant la hiérarchie d'objets.

17. Système selon la revendication 15, dans lequel les classes d'objets comprennent une classe de système de gestion de base de données, une classe de base de données et une classe de table de données.

18. Système selon la revendication 17, dans lequel :
la classe de système de gestion de base de données est associée à une première classe d'objets dans la hiérarchie d'objets ;
la classe de base de données est associée à une seconde classe d'objets dans la hiérarchie d'objets ; et
la classe de table de données est associée à une troisième classe d'objets dans la hiérarchie d'objets.

19. Système selon la revendication 17, dans lequel la requête d'informations est une seconde interrogation formatée en vue d'une exécution sur le système de gestion de base de données.

20. Système selon la revendication 15, dans lequel la requête d'informations est une requête pour laquelle les propriétés des objets sélectionnés sont découvrables.

21. Système selon la revendication 15, dans lequel la requête d'informations est une requête d'informations concernant des propriétés spécifiées des objets sélectionnés.

22. Système selon la revendication 15, comprenant en outre un dispositif informatique client destiné à exécuter les étapes suivantes comprenant :
la génération de la première interrogation ; et
la réception du premier objet des résultats de requête d'informations.
